# FASCICULE DE BREVET EUROPEEN

(11) **EP 3 124 833 B1**
(45) Date de publication et mention de la délivrance du brevet: **11.09.2019**
(21) Numéro de dépôt: 16178419.4
(22) Date de dépôt: 07.07.2016
(51) Int. Cl.: F16H 59/02, B60K 20/02

(54) **DISPOSITIF DE CHANGEMENT DES RAPPORTS DE VITESSE COMPRENANT UN CANAL DE GUIDAGE DU CABLE DE MARCHE ARRIERE**
VORRICHTUNG ZUM UMSCHALTEN DES GESCHWINDIGKEITSÜBERSETZUNGSVERHÄLTNISSES, DIE EINE KABELFÜHRUNG FÜR DEN RÜCKWÄRTSGANG UMFASST
DEVICE FOR MODIFYING SPEED RATIOS WITH A GUIDE CHANNEL FOR THE REVERSE CABLE

(30) Priorité: 29.07.2015 FR 1557236
(43) Date de publication de la demande: 01.02.2017
(73) Titulaire: PSA Automobiles SA, 78300 Poissy (FR)
(72) Inventeur: ORHANT, MATHIEU, 25400 AUDINCOURT (FR); POIRRIER, PASCAL, 70290 CHAMPAGNEY (FR); SAILLARD, LAURENT, 90400 DANJOUTIN (FR)

(56) Documents cités:
- EP-A2- 0 823 575
- CN-A- 102 072 313
- US-A- 1 881 790
- US-A- 3 974 711
- US-A1- 2007 144 296

## Description

La présente invention se rapporte à un dispositif de changement de rapports de vitesse d'un véhicule automobile.

Un dispositif de changement de rapport de vitesse comprend un levier de commande et une gâchette permettant d'actionner un câble de commande de la marche arrière. La gâchette est généralement positionnée à proximité du pommeau du levier pour être actionnée par la main du conducteur. Il est courant que le câble d'actionnement s'étende autour du levier, de la gâchette à une sortie du boitier du dispositif de changement de rapport.

Bien souvent, on constate que le câble se déplace autour du levier durant son cycle de vie d'utilisation. Cela est problématique car il entre en contact et fait résistance avec des éléments de la console du poste de conduite. Les contacts génèrent par ailleurs des vibrations et du bruit dans l'habitacle.

Le document US-A-1 881 790 divulgue un mécanisme de verrou de levier de vitesses.

Le document US-A-2007 144 296 divulgue un levier de changement de rapport de vitesses avec verrou de marche arrière.

On connaît le brevet français FR2856961B1 décrivant un dispositif de changement de rapport de vitesses comprenant des anneaux permettant de guider le câble d'actionnement de la marche arrière le long du levier afin de le contraindre sur le levier. On connaît également le brevet français FR2883229B1 qui décrit un dispositif comprenant un anneau et une pince répartis le long du levier pour guider le câble sur la longueur du levier.

On notera que le levier est généralement recouvert d'une housse pour des raisons de protection et d'esthétisme de la console de pilotage. Lorsqu'un opérateur de maintenance souhaite démonter le câble, il est alors nécessaire d'ôter la housse pour atteindre les anneaux et les pinces de guidage. Cette opération est compliquée pour l'opérateur.

L'objet de l'invention est de proposer un dispositif dont le câble de marche arrière est contraint dans l'espace du levier et dont l'accès pour la maintenance est facilité pour l'opérateur.

L'invention concerne un dispositif de changement des rapports de vitesses d'un véhicule automobile conforme à la revendication 1.

D'autres caractéristiques de l'invention sont énoncées dans les revendications dépendantes.

L'invention prévoit un véhicule automobile comprenant un dispositif de changement des rapports de vitesses conforme à la revendication 7.

D'autres détails et caractéristiques avantageuses de l'invention ressortent de la description détaillée faite ci-après en référence aux figures annexées qui montrent :
- La figure 1 représente une vue en trois dimensions d'un dispositif de changement des rapports de vitesses selon l'invention ;
- La figure 2 représente une première vue agrandie du surmoulage comprenant le canal de guidage du câble du dispositif de changement des rapports de vitesses ;
- La figure 3 représente une deuxième vue du surmoulage.

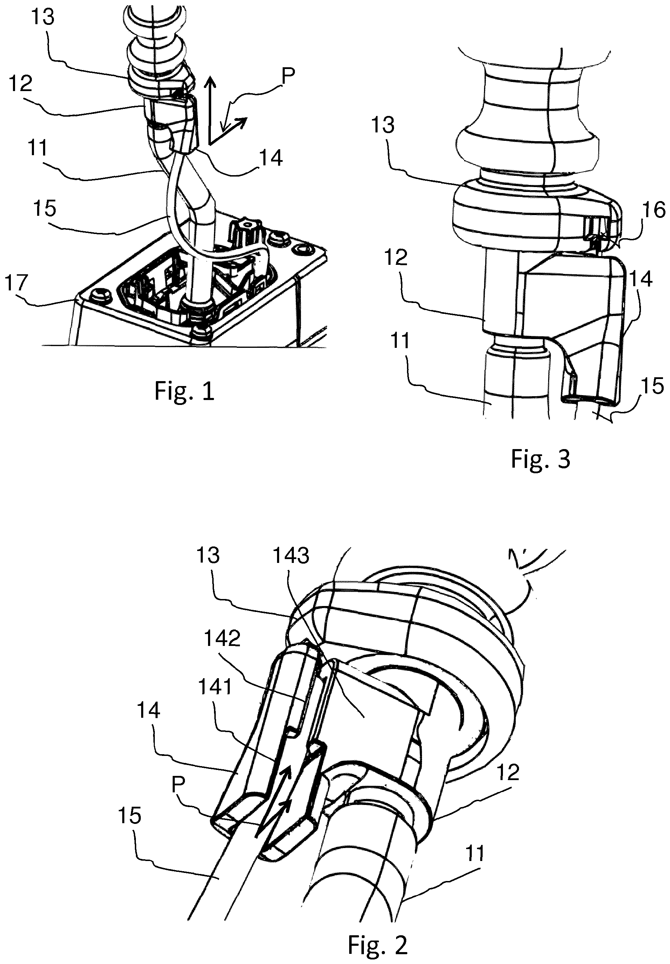

L'invention concerne les dispositifs de changement des rapports de vitesse d'un véhicule automobile dont la marche arrière est actionnée manuellement par le conducteur. La figure 1 représente un dispositif comprenant un levier 11 de commande, un surmoulage 12 recouvrant le levier 11 et une gâchette 13 montée sur le surmoulage 12 pour actionner un câble de commande 15 de la marche arrière du véhicule. L'extrémité supérieure du levier 11 est manipulable par le conducteur, généralement par un pommeau saisissable (non représenté sur la figure) recouvrant la tête du levier.

Le levier est un corps cylindrique pouvant comprendre, mais non nécessairement, des parties déviées comme représentées sur la figure 1. Dans ce cas-ci, le corps du levier comprend deux déviations permettant un positionnement dévié du pommeau par rapport à l'autre extrémité du levier en entrée du boitier 17 à la base du dispositif de changement des rapports de vitesse.

Le levier comprend un axe longitudinal sensiblement vertical pivotant à la base pour la sélection des rapports de vitesses. Dans la suite de la description, on considère l'axe longitudinal du levier comme étant l'axe longitudinal du tronçon cylindrique du levier portant le surmoulage 12.

Par son déplacement, le levier 11 permet au conducteur de sélectionner les rapports de vitesses de marche avant (premier rapport, jusqu'au cinquième ou au sixième rapport) ainsi que le rapport de la marche arrière. Le levier 11 est en liaison rotule au niveau du boitier de la base et pivote pour la sélection des rapports de vitesses.

Le surmoulage 12 est posé sur le levier 11 de façon à recouvrir tout ou en partie (comme représenté sur la figure 1) le levier cylindrique. Le surmoulage comprend un conduit interne en contact avec le corps du levier 11 et une surface externe dont le profil est destiné à recevoir la gâchette 13 et le pommeau.

Le câble 15 du rapport de la marche arrière est actionné à une première extrémité par la gâchette 13 et, à l'autre extrémité, celui-ci pénètre dans le boitier 17 de la base. Le câble 15 s'étend entre la gâchette 13 positionnée sur la partie supérieure du levier 11 et le boitier 17 de la base. Le câble est en liaison fixe avec l'entrée du boitier 17 et la gâchette 13. Le câble 15 coulisse lorsqu'il est actionné par la gâchette. La gâchette 13 coulisse verticalement (longitudinalement au levier) sur le surmoulage 12 lorsqu'elle est actionnée par le conducteur.

La figure 2 représente plus précisément le surmoulage et la face visible du canal de guidage. Le surmoulage 12 comprend un canal de guidage 14 du câble de sorte à exercer une force de flexion sur le câble qui le maintient dans un plan de positionnement P lorsque le câble est fixé à la gâchette et est monté dans le canal de guidage. La force de flexion est exercée par la contrainte exercée sur la première extrémité du câble 15 par le canal de guidage et sur l'autre extrémité du câble par l'entrée du boitier 17 de la base.

Le câble 15 est ainsi forcé dans le plan de positionnement P voulu lorsque le levier est manipulé et se déplace dans son espace. Le plan de positionnement P est déterminé pour que le câble n'entre pas en contact avec des éléments de la console. Le plan de positionnement s'étend verticalement le long du levier à quelques millimètres ou centimètres du levier. On notera que le plan de positionnement du câble pivote autour de la liaison fixe du câble en entrée du boitier 17.

Par ailleurs, le plan de positionnement P est déterminé par l'orientation et l'inclinaison du canal de guidage 14 par rapport à l'axe du levier. On notera que l'axe longitudinal du canal de guidage est incliné dans le plan de positionnement P par rapport à l'axe longitudinal du levier. L'inclinaison exerce la force de flexion et oriente le câble. Le sommet de l'angle d'inclinaison est sensiblement positionné au point de fixation du câble dans la gâchette, l'angle étant formé par l'axe du canal de guidage et l'axe du levier. Par exemple, l'inclinaison du canal de guidage est préférentiellement d'environ 45° par rapport à l'axe longitudinal du levier.

On notera que l'axe longitudinal du canal de guidage 14 peut être incliné dans le plan de positionnement dans une plage de valeur comprise entre 10° et 80° par rapport à l'axe longitudinal du levier 11. Par ailleurs, l'inclinaison peut être orientée vers l'arrière du levier comme cela est représenté sur la figure ou vers l'avant du levier.

Le canal de guidage s'étend à côté du levier 11, parallèlement à l'axe longitudinal du levier 11, à quelques millimètres ou centimètres selon la configuration. Le canal de guidage 14 est relié au corps du surmoulage 12 sur le levier par une jointure 143 sous la gâchette 13. Le canal de guidage est positionné dans la zone supérieure du levier à proximité de la gâchette 13.

De préférence, le canal de guidage 14 est moulé dans le corps du surmoulage 12 formant ainsi une seule et unique pièce. Dans une variante non représentée, il est envisageable que le canal de guidage soit fixé sur le levier ou le surmoulage par un anneau séparé.

Le canal de guidage est ainsi monté sur le levier en même temps que le surmoulage. Lors du montage du câble 15, l'opérateur glisse le câble à l'intérieur du canal et le fixe ensuite à la gâchette 13. Une fois le câble posé il n'est pas nécessaire d'ajouter d'autres éléments de fixation du canal.

De plus, lorsqu'une intervention est nécessaire pour réparer ou changer le câble 15, il suffit à l'opérateur de retirer le pommeau et retirer le câble du canal de guidage, sans avoir à retirer des colliers ou anneaux repartis le long du levier. Son accès est simplifié car il existe une unique zone d'attache sur le levier à l'extrémité du câble.

Le canal de guidage a une longueur de quelques centimètres, par exemple entre un et cinq centimètres. On notera que la longueur du canal augmente le maintien du câble dans le plan de positionnement P.

De plus, le canal de guidage 14 comprend sur sa longueur une partie découverte 141 et une partie partiellement recouverte 143 pour emprisonner le câble dans le canal. La partie partiellement recouverte bloque ainsi le câble dans sa position. Il est envisageable que le canal 14 soit totalement recouvert formant ainsi un tube de guidage.

La figure 3 représente le surmoulage 12 et la face non visible du canal de guidage 14. Le canal de guidage 14 s'étend sous la gâchette 13 à côté du levier 11. La gâchette 13 comprend une cavité permettant de fixer la tête 16 du câble 15.

On notera que l'orientation et l'inclinaison du canal de guidage peut varier selon le plan de positionnement voulu du câble sans être dépendant de l'axe du levier 11, ce qui est le cas dans les solution de l'art antérieur. Dans les figures le plan de positionnement P du câble s'étend en avant et arrière du levier, en considérant les références avant et arrière du véhicule. Dans une variante, le plan de positionnement P peut s'étendre de gauche à droite du levier si le besoin le requière.

## Revendications

1. Dispositif de changement des rapports de vitesse d'un véhicule automobile comprenant un levier de commande (11), un câble de commande (15) de la marche arrière du véhicule, un surmoulage (12) recouvrant le levier et une gâchette (13) coulissant longitudinalement au levier, sur le surmoulage (12) pour actionner ledit câble (15), le surmoulage (12) comprenant un canal de guidage (14) du câble (15), **caractérisé en ce que** l'axe longitudinal du canal de guidage (14) est incliné dans un plan de positionnement (P) par rapport à l'axe longitudinal du levier (11), l'axe longitudinal du levier étant l'axe longitudinal du tronçon cylindrique du levier portant le surmoulage (12), de sorte à exercer une force de flexion sur le câble (15) lorsque ledit câble (15) est fixé à la gâchette (13) et est monté dans le canal de guidage (14).

2. Dispositif selon la revendication 1, **caractérisé en ce que** le canal de guidage (14) est moulé dans le corps du surmoulage (12).

3. Dispositif selon la revendication 1 ou 2, **caractérisé en ce que** l'axe longitudinal du canal de guidage (14) est incliné dans le plan de positionnement dans une plage de valeur comprise entre 10° et 80° par rapport à l'axe longitudinal du levier (11).

4. Dispositif selon l'une quelconque des revendications 1 à 3, **caractérisé en ce que** le canal de guidage (14) comprend sur sa longueur une partie découverte (141) et une partie partiellement recouverte (142) pour emprisonner le câble dans le canal.

5. Dispositif selon l'une quelconque des revendications 1 à 4, **caractérisé en ce que** le canal de guidage (14) est positionné à l'extrémité du câble (15) fixée sur la gâchette (13).

6. Dispositif selon l'une quelconque des revendications 1 à 5, **caractérisé en ce que** le canal de guidage (14) a une longueur comprise entre un et cinq centimètres.

7. Véhicule automobile comprenant un dispositif de changement des rapports de vitesses, **caractérisé en ce que** le dispositif de changement des rapports de vitesse est conforme à l'une quelconque des revendications 1 à 6.

## Patentansprüche

1. Vorrichtung zum Umschalten der Geschwindigkeitsübersetzungsverhältnisse eines Kraftfahrzeugs, die einen Schalthebel (11), ein Steuerkabel (15) des Rückwärtsgangs des Fahrzeugs, eine Umspritzung (12), die den Hebel abdeckt, und einen Drücker (13), der längs entlang des Hebels auf der Umspritzung (12) gleitet, um das Kabel (15) zu betätigen, umfasst, wobei die Umspritzung (12) einen Führungskanal (14) des Kabels (15) umfasst, **dadurch gekennzeichnet, dass** die Längsachse des Führungskanals (14) in einer Positionierungsebene (P) bezüglich der Längsachse des Hebels (11) geneigt ist, wobei die Längsachse des Hebels die Längsachse des zylindrischen Abschnitts des Hebels, der die Umspritzung (12) trägt, ist, so dass eine Biegekraft auf das Kabel (15) ausgeübt wird, wenn das Kabel (15) an dem Drücker (13) befestigt und in dem Führungskanal (14) montiert ist.

2. Vorrichtung nach Anspruch 1, **dadurch gekennzeichnet, dass** der Führungskanal (14) in den Körper der Umspritzung (12) geformt ist.

3. Vorrichtung nach Anspruch 1 oder 2, **dadurch gekennzeichnet, dass** die Längsachse des Führungskanals (14) in der Positionierungsebene in einem Wertebereich geneigt ist, der zwischen 10° und 80° bezüglich der Längsachse des Hebels (11) liegt.

4. Vorrichtung nach einem der Ansprüche 1 bis 3, **dadurch gekennzeichnet, dass** der Führungskanal (14) auf seiner Länge einen aufgedeckten Teil (141) und einen teilweise abgedeckten Teil (142) umfasst, um das Kabel in dem Kanal gefangen zu halten.

5. Vorrichtung nach einem der Ansprüche 1 bis 4, **dadurch gekennzeichnet, dass** der Führungskanal (14) an dem Ende des Kabels (15), das auf dem Drücker (13) befestigt ist, positioniert ist.

6. Vorrichtung nach einem der Ansprüche 1 bis 5, **dadurch gekennzeichnet, dass** der Führungskanal (14) eine Länge zwischen einem und fünf Zentimetern aufweist.

7. Kraftfahrzeug, das eine Vorrichtung zum Umschalten des Geschwindigkeitsübersetzungsverhältnisses umfasst, **dadurch gekennzeichnet, dass** die Vorrichtung zum Umschalten des Geschwindigkeitsübersetzungsverhältnisses einem der Ansprüche 1 bis 6 entspricht.

## Claims

1. A device for modifying speed ratios of a motor vehicle including a control lever (11), a control cable (15) of the reverse gear of the vehicle, an overmoulding (12) covering the lever and a trigger (13) sliding longitudinally to the lever, on the overmoulding (12) to actuate said cable (15), the overmoulding (12) including a guide channel (14) of the cable (15), **characterized in that** the longitudinal axis of the guide channel (14) is inclined in a positioning plane (P) with respect to the longitudinal axis of the lever (11), the longitudinal axis of the lever being the longitudinal axis of the cylindrical portion of the lever carrying the overmoulding (12) so as to exert a bending force on the cable (15) when said cable (15) is fixed to the trigger (13) and is mounted in the guide channel (14).

2. The device according to Claim 1, **characterized in that** the guide channel (14) is moulded in the body of the overmoulding (12).

3. The device according to Claim 1 or 2, **characterized in that** the longitudinal axis of the guide channel (14) is inclined in the positioning plane in a value range comprised between 10° and 80° with respect to the longitudinal axis of the lever (11).

4. The device according to any one of Claims 1 to 3, **characterized in that** the guide channel (14) includes over its length an uncovered part (141) and a partially covered part (142) to trap the cable in the channel.

5. The device according to any one of Claims 1 to 4, **characterized in that** the guide channel (14) is positioned at the end of the cable (15) fixed on the trigger (13).

6. The device according to any one of Claims 1 to 5, **characterized in that** the guide channel (14) has a length comprised between one and five centimetres.

7. A motor vehicle including a device for modifying speed ratios, **characterized in that** the device for modifying speed ratios is according to any one of Claims 1 to 6.
